# EUROPEAN PATENT APPLICATION

(11) **EP 4 564 996 A1**
(43) Date of publication of application: **04.06.2025**
(21) Application number: 22952272.7
(22) Date of filing: 26.07.2022
(51) Int. Cl.: H04W 76/27

(54) **INACTIVE MULTICAST SERVICE RECEIVING METHOD AND DEVICE, AND INACTIVE MULTICAST SERVICE CONFIGURATION SENDING METHOD AND DEVICE**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Dehns Germany Partnerschaft mbB
(86) International application number: PCT/CN2022/108037
(87) International publication number: WO 2024/020807

(57) **Abstract**

The present disclosure relates to an inactive multicast service receiving method and device, and an inactive multicast service configuration sending method and device. The inactive multicast service receiving method comprises: according to a first inactive multicast service configuration corresponding to a first cell which is camped on, receiving an inactive multicast service. According to the present disclosure, a terminal can receive the inactive multicast service according to the first inactive multicast service configuration corresponding to the first cell after camping on the first cell in an inactive state. In this way, it can be ensured that the terminal can smoothly determine the first inactive multicast service configuration after camping on the cell in the inactive state, and receive the inactive multicast service in the inactive state on the basis of the first inactive multicast service configuration.

## Description

### TECHNICAL FIELD

The present disclosure relates to a field of communication technology, and more particularly, to a method for receiving an inactive multicast broadcast service, a method for sending an inactive multicast broadcast service configuration, an apparatus for receiving an inactive multicast broadcast service, an apparatus for sending an inactive multicast broadcast service configuration, a communication apparatus, and a computer-readable storage medium.

### BACKGROUND

In the related art, multicast broadcast services are only supported for reception in a connected state, i.e., in order for a terminal to receive the multicast broadcast service, the terminal needs to establish a Radio Resource Control (RRC) connection first, then a network device sends a multicast broadcast service configuration to the terminal via a terminal-specific signaling, and the terminal receives the multicast broadcast service according to the multicast broadcast service configuration.

However, receiving the multicast broadcast service only in the connected state is insufficient to meet the requirement of some services, especially in cells with a relatively large number of terminals, and when some terminals need to receive the multicast broadcast service, they cannot immediately enter the connected state and may experience a certain delay, which is unacceptable for the multicast broadcast service requiring lower latency. Moreover, keeping the terminal in the connected state to receive the multicast broadcast service may also result in significant power consumption.

### SUMMARY

In view of this, the embodiments of the present disclosure propose a method for receiving an inactive multicast broadcast service, a method for sending an inactive multicast broadcast service configuration, an apparatus for receiving an inactive multicast broadcast service, an apparatus for sending an inactive multicast broadcast service configuration, a communication apparatus, and a computer-readable storage medium to solve technical problems in the related art.

According to a first aspect of the embodiments of the present disclosure, a method for receiving an inactive multicast broadcast service is proposed, which is performed by a terminal. The method includes: receiving the inactive multicast broadcast service according to a first inactive multicast broadcast service configuration corresponding to a first cell where the terminal resides.

According to a second aspect of the embodiments of the present disclosure, a method for sending an inactive multicast broadcast service configuration is proposed, which is performed by a network device. The method includes: sending a first inactive multicast broadcast service configuration corresponding to a first cell to a terminal, where the first inactive multicast broadcast service configuration is configured for the terminal to receive an inactive multicast broadcast service according to the first inactive multicast broadcast service configuration after the terminal resides in the first cell.

According to a third aspect of the disclosed embodiment, an apparatus for receiving an inactive multicast broadcast service is proposed, which includes a receiving module configured to receive the inactive multicast broadcast service according to a first inactive multicast broadcast service configuration corresponding to a first cell where the terminal resides.

According to a fourth aspect of this disclosed embodiment, an apparatus for sending an inactive multicast broadcast service configuration is proposed, which includes: a sending module configured to send a first inactive multicast broadcast service configuration corresponding to a first cell to a terminal, where the first inactive multicast broadcast service configuration is configured for the terminal to receive an inactive multicast broadcast service according to the first inactive multicast broadcast service configuration after the terminal resides in the first cell.

According to a fifth aspect of this disclosed embodiment, a communication apparatus is proposed, including: a processor; a memory used for storing a computer program; when the computer program is executed by the processor, the method for receiving the inactive multicast broadcast service described in any of the above embodiments is implemented.

According to a sixth aspect of the disclosed embodiment, a communication apparatus is proposed, including: a processor; a memory used for storing a computer programs; when the computer program is executed by the processor, the method for sending the inactive multicast broadcast service configuration described in any of the above embodiments is implemented.

According to a seventh aspect of the embodiments of the present disclosure, a computer-readable storage medium for storing a computer program is proposed. When the computer program is executed by a processor, the method for receiving the inactive multicast broadcast service described in any of the above embodiments is implemented.

According to an eighth aspect of the embodiments of the present disclosure, a computer-readable storage medium for storing a computer program is proposed. When the computer program is executed by a processor, the method for sending the inactive multicast broadcast service configuration described in any of the above embodiments is implemented.

According to the embodiments of the present disclosure, the terminal may receive the inactive multicast broadcast service according to the first inactive multicast broadcast service configuration corresponding to the first cell after residing in the first cell in an inactive state. This ensures that the terminal may smoothly determine the first inactive multicast broadcast service configuration after residing in the cell in the inactive state, and receive the inactive multicast broadcast service in the inactive state based on the first inactive multicast broadcast service configuration.

### BRIEF DESCRIPTION OF THE DRAWINGS

In order to illustrate technical solutions in embodiments of the present disclosure more clearly, accompanying drawings to be used in the description of embodiments will be briefly introduced below. Apparently, the drawings in the following description only show some embodiments of the present disclosure. For those ordinarily skilled in the art, other drawings may also be obtained according to these drawings without any creative effort.
FIG. 1 is a schematic flowchart illustrating a method for receiving an inactive multicast broadcast service according to an embodiment of the present disclosure.
FIG. 2 is a schematic flowchart of using a first inactive multicast broadcast service configuration according to an embodiment of the present disclosure.
FIG. 3 is a schematic flowchart for determining whether a second inactive multicast broadcast service configuration is the same as a first inactive multicast broadcast service configuration according to an embodiment of the present disclosure.
FIG. 4 is another schematic flowchart for determining whether a second inactive multicast broadcast service configuration is the same as a first inactive multicast broadcast service configuration according to an embodiment of the present disclosure.
FIG. 5 is a schematic flowchart illustrating a method for sending an inactive multicast broadcast service configuration according to an embodiment of the present disclosure.
FIG. 6 is a schematic flowchart illustrating another method for sending an inactive multicast broadcast service configuration according to an embodiment of the present disclosure.
FIG. 7 is a schematic flowchart illustrating another method for sending an inactive multicast broadcast service configuration according to an embodiment of the present disclosure.
FIG. 8 is a schematic block diagram illustrating an apparatus for receiving an inactive multicast broadcast service according to an embodiment of the present disclosure.
FIG. 9 is a schematic block diagram illustrating an apparatus for sending an inactive multicast broadcast service configuration according to an embodiment of the present disclosure.
FIG. 10 is a schematic block diagram illustrating an apparatus for receiving an inactive multicast broadcast service according to an embodiment of the present disclosure.
FIG. 11 is a schematic block diagram illustrating an apparatus for sending an inactive multicast broadcast service configuration according to an embodiment of the present disclosure.

### DETAILED DESCRIPTION

In the following, the technical solutions in the embodiments of the present disclosure will be clearly and completely described with reference to the attached drawings in the embodiments of the present disclosure. Obviously, the described embodiments are only a part of the embodiments, but not all of the embodiments of the present disclosure. Based on the embodiments of the present disclosure, all other embodiments obtained by those of skilled in the art without paying creative work fall within the scope of the present disclosure.

Terms used in the embodiments of the present disclosure are for the purpose of describing particular examples only, and are not intended to limit the present disclosure. Terms determined by "a", and "the" in their singular forms in the embodiments of the present disclosure and the appended claims are also intended to include plurality, unless clearly indicated otherwise in the context. It should also be understood that the term "and/or" as used herein refers to and includes any and all possible combinations of one or more of the associated listed items.

It should be understood that, although the terms "first," "second," "third," and the like may be used in the embodiments of the present disclosure to describe various information, such information should not be limited to these terms. These terms are only used to distinguish one category of information from another. For example, without departing from the scope of the embodiments of the present disclosure, first information may be referred as second information; and similarly, the second information may also be referred as the first information. Depending on the context, the term "if" as used herein may be interpreted as "when" or "upon" or "in response to determining".

For purposes of brevity and ease of understanding, terms "greater than" or "less than", "higher than" or "lower than" are used herein when characterizing a magnitude relationship. However, for those skilled in the art, it can be understood that the term "greater than" also covers the meaning of "greater than or equal to", and the term "less than" also covers the meaning of "less than or equal to"; and the term "higher than" covers the meaning of "higher than and equal to", and the term "lower than" also covers the meaning of "lower than and equal to.

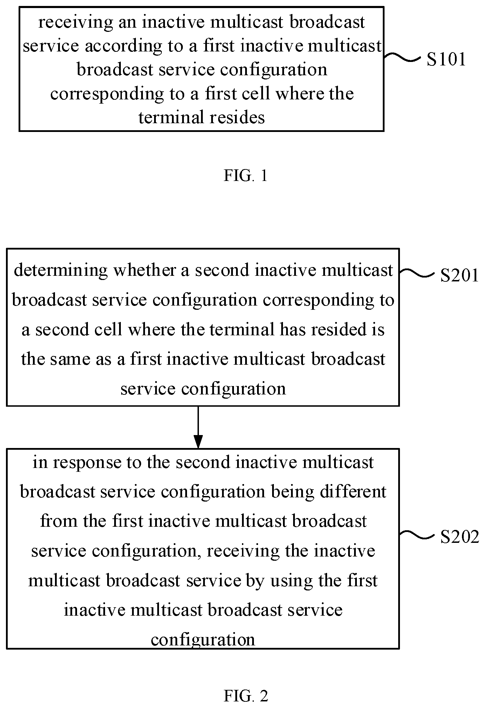

FIG. 1 is a schematic flowchart illustrating a method for receiving an inactive multicast broadcast service according to an embodiment of the present disclosure. The method for receiving the inactive multicast broadcast service shown in the embodiments may be performed by a terminal, and the terminal includes but is not limited to a mobile phone, a tablet computer, a wearable device, a sensor, an Internet of Things device, and other communication devices. The terminal may communicate with a network device, and the network device includes but is not limited to a network device in a communication system such as 4G, 5G, and 6G, for example, a base station, a core network, and the like.

As shown in FIG. 1, the method for receiving an inactive multicast broadcast service may include the following step:
in step S101, an inactive multicast broadcast service is received according to a first inactive multicast broadcast service configuration corresponding to the first cell where the terminal resides.

In one embodiment, the terminal may receive the multicast broadcast service in an inactive state, and when the terminal resides in a cell in an inactive state, it may receive an inactive multicast broadcast service according to the inactive multicast broadcast service configuration corresponding to the first cell where the terminal resides (e.g., referred to as the first inactive multicast broadcast service configuration). A cell where the terminal resided before residing in the first cell may be referred to as the second cell where the terminal has resided. The second cell may be one or a plurality of cells, including any cell that the terminal had resided before residing in the first cell.

The inactive multicast broadcast service configuration includes but is not limited to a time-domain resource, a frequency-domain resource, a service type, and a service quality for receiving the inactive multicast broadcast service.

It should be noted that "residing" includes at least one of the following: cell selection or cell reselection. Taking the cell selection as an example, the present embodiment may be referred to as: receiving the inactive multicast broadcast service according to the first inactive multicast broadcast service configuration corresponding to the first cell selected in the cell selection; taking the cell reselection as an example, the present embodiment may be referred to as: receiving an inactive multicast broadcast service according to the first inactive multicast broadcast service configuration corresponding to the first cell selected in the cell reselection.

In one embodiment, the first inactive multicast broadcast service configuration may be determined by the terminal before residing in the first cell, for example, when the terminal resides in the second cell, the network device sends the first inactive multicast broadcast service configuration to the first cell and indicates that the first inactive multicast broadcast service configuration is applicable to the first cell. For example, the network device may carry the first inactive multicast broadcast service configuration in a radio resource control release RRC Release message and send it to the terminal.

In one embodiment, the first inactive multicast broadcast service configuration may be determined by the terminal after residing in the first cell, for example, after the terminal resides in the first cell, the network device sends the first inactive multicast broadcast service configuration to the terminal. For example, the network device may carry the first inactive multicast broadcast service configuration in a paging message or a radio resource control release RRC Release message and send it to the terminal.

According to the embodiments of the present disclosure, the terminal may receive the inactive multicast broadcast service according to the first inactive multicast broadcast service configuration corresponding to the first cell after the terminal resides in the first cell in the inactive state. Thus, this ensures that after residing in the inactive state in the cell, the terminal may smoothly determine the first inactive multicast broadcast service configuration and receive the inactive multicast broadcast service according to the first inactive multicast broadcast service configuration in the inactive state.

In one embodiment, the receiving the inactive multicast broadcast service according to the first inactive multicast broadcast service configuration corresponding to the first cell where the terminal resides includes at least one of following:
receiving the inactive multicast broadcast service by using the first inactive multicast broadcast service configuration corresponding to the first cell; or
stopping using a second inactive multicast broadcast service configuration corresponding to a second cell where the terminal has resided.

In one embodiment, the receiving the inactive multicast broadcast service by using the first inactive multicast broadcast service configuration corresponding to the first cell where the terminal resides may refer to using the first inactive multicast broadcast service configuration corresponding to the first cell for receiving the inactive multicast broadcast service.

That is, after the terminal resides in the first cell, the terminal may use the first inactive multicast broadcast service configuration corresponding to the first cell where the terminal resides to receive the inactive multicast broadcast service in the inactive state.

In one embodiment, the receiving the inactive multicast broadcast service according to the first inactive multicast broadcast service configuration corresponding to the first cell where the terminal resides may refer to stopping the use of the second inactive multicast broadcast service configuration corresponding to the second cell where the terminal has resided.

That is, after the terminal resides in the first cell, the terminal may stop using the second inactive multicast broadcast service configuration corresponding to the second cell where the terminal has resided. In this case, the terminal may default to using the first inactive multicast broadcast service configuration corresponding to the first cell where the terminal resides, and receive the inactive multicast broadcast service in the inactive state.

In one embodiment, the receiving the inactive multicast broadcast service according to the first inactive multicast broadcast service configuration corresponding to the first cell where the terminal resides may refer to receiving the inactive multicast broadcast service by using the first inactive multicast broadcast service configuration corresponding to the first cell and stopping using the second inactive multicast broadcast service configuration corresponding to the second cell where the terminal has resided.

That is, after residing in the first cell, the terminal may, on the one hand, use the first inactive multicast broadcast service configuration corresponding to the first cell where the terminal resides, and on the other hand, stop using the second inactive multicast broadcast service configuration corresponding to the second cell where the terminal has resided.

The manner for using the first inactive multicast broadcast service configuration and stopping using the second inactive multicast broadcast service configuration will be described in the subsequent embodiments.

In one embodiment, the receiving the inactive multicast broadcast service by using the first inactive multicast broadcast service configuration corresponding to the first cell includes at least one of the following:
activating the first inactive multicast broadcast service configuration; or
resuming the first inactive multicast broadcast service configuration.

For example, if the terminal has already stored the first inactive multicast broadcast service configuration before residing in the first cell, then after the terminal resides in the first cell, the terminal may activate the first inactive multicast broadcast service configuration to receive the inactive multicast broadcast service using the first inactive multicast broadcast service configuration.

For example, if the terminal has already stored the first inactive multicast broadcast service configuration before residing in the first cell, but the first inactive multicast broadcast service configuration is in a deactivated state, then after the terminal resides in the first cell, the terminal may activate the first inactive multicast broadcast service configuration and thus use the first inactive multicast broadcast service configuration to receive the inactive multicast broadcast service.

For example, if the terminal has already stored the first inactive multicast broadcast service configuration before residing in the first cell, then after the terminal resides in the first cell, the terminal may resume the first inactive multicast broadcast service configuration and use the first inactive multicast broadcast service configuration to receive the inactive multicast broadcast service.

For example, if the terminal has already stored the first inactive multicast broadcast service configuration before residing in the first cell, but the first inactive multicast broadcast service configuration is in a suspended state, then after the terminal resides in the first cell, the terminal may resume the first inactive multicast broadcast service configuration and use the first inactive multicast broadcast service configuration to receive the inactive multicast broadcast service.

In one embodiment, the stopping using second inactive multicast broadcast service configuration corresponding to the second cell where the terminal has resided includes at least one of the following:
deactivating the second inactive multicast broadcast service configuration; or
suspending the second inactive multicast broadcast service configuration.

For example, if the terminal uses the second inactive multicast broadcast service configuration before residing in the first cell, then after residing in the first cell, the terminal may deactivate the second inactive multicast broadcast service configuration and stop using the second inactive multicast broadcast service configuration.

For example, if the terminal has already stored the second inactive multicast broadcast service configuration before residing in the first cell, and the second inactive multicast broadcast service configuration is in an active state, then after residing in the first cell, the terminal may deactivate the second inactive multicast broadcast service configuration and stop using the second inactive multicast broadcast service configuration.

For example, if the terminal uses the second inactive multicast broadcast service configuration before residing in the first cell, then after residing in the first cell, the terminal may suspend the second inactive multicast broadcast service configuration and stop using the second inactive multicast broadcast service configuration.

For example, if the terminal has already stored the second inactive multicast broadcast service configuration before residing in the first cell, then after residing in the first cell, the terminal may suspend the second inactive multicast broadcast service configuration and stop using the second inactive multicast broadcast service configuration.

In one embodiment, the first inactive multicast broadcast service configuration includes a multicast broadcast service configuration specific to a bandwidth part BWP corresponding to the first cell.

The first inactive multicast broadcast service configuration refers to the inactive multicast broadcast service configuration of the first cell, which may specifically be the multicast broadcast service configuration specific to the BWP corresponding to the first cell, that is, the multicast broadcast service configuration is specifically applicable to one or a plurality of specific BWPs in the BWP corresponding to the first cell.

In one embodiment, the multicast broadcast service configuration specific to the BWP corresponding to the first cell includes a multicast broadcast service configuration specific to an initial BWP corresponding to the first cell. That is, the first inactive multicast broadcast service is specifically applicable to the multicast broadcast service configuration of the initial BWP in the BWP corresponding to the first cell.

In one embodiment, the multicast broadcast service configuration specific to the BWP corresponding to the first cell includes a common frequency resource (CFR) configuration of the multicast broadcast service. That is, the first inactive multicast broadcast service configuration may include the common frequency resource CFR configuration of the multicast broadcast service, which is specifically applicable to one or a plurality of specific BWPs in the BWP corresponding to the first cell.

In one embodiment, the multicast broadcast service configuration specific to the BWP corresponding to the first cell includes a CFR configuration of the multicast broadcast service. That is, the first inactive multicast broadcast service configuration may include the common frequency resource CFR configuration of the multicast broadcast service, and the CFR configuration of the multicast broadcast service is specifically applicable to the initial BWP corresponding to the first cell.

In one embodiment, the common frequency resource CFR configuration of the multicast broadcast service includes at least one of the following:
a frequency domain resource location and a bandwidth;
a physical downlink control channel (PDCCH) configuration;
a physical downlink shared channel (PDSCH) configuration; or
a semi-persistent scheduling (SPS) configuration.

FIG. 2 is a schematic flowchart of using a first inactive multicast broadcast service configuration according to an embodiment of the present disclosure. As shown in FIG. 2, the use of the first inactive multicast broadcast service configuration for receiving the inactive multicast broadcast service includes:
in step S201, it is determined whether the second inactive multicast broadcast service configuration corresponding to the second cell where the terminal has resided is the same as the first inactive multicast broadcast service configuration;
in step S202, in response to the second inactive multicast broadcast service configuration being different from the first inactive multicast broadcast service configuration, the first inactive multicast broadcast service configuration is used for receiving the inactive multicast broadcast service, and/or the use of the second inactive multicast broadcast service configuration corresponding to the second cell where the terminal has resided is stopped.

In one embodiment, the terminal may reside in the second cell before residing in the first cell, and may use the second inactive multicast broadcast service configuration corresponding to the second cell to receive the inactive multicast broadcast service. After the terminal changes from residing in the second cell to residing in the first cell, it may change to using the first inactive multicast broadcast service configuration to receive the inactive multicast broadcast service. During this process, a change in the configuration used for receiving the inactive multicast broadcast service is required, one one hand, this occupies the processor performance of the terminal, and on the other hand, it also results in power consumption.

Thus, it may be determined whether the second inactive multicast broadcast service configuration is the same as the first inactive multicast broadcast service configuration. In the case where the second inactive multicast broadcast service configuration is different from the first inactive multicast broadcast service configuration, the first inactive multicast broadcast service configuration may be used to receive the inactive multicast broadcast service after the terminal resides in the first cell; in the case where the second inactive multicast broadcast service configuration is the same as the first inactive multicast broadcast service configuration, after the terminal resides in the first cell, the terminal may continue using the second inactive multicast broadcast service configuration for receiving the inactive multicast broadcast service without changing to using the first inactive multicast broadcast service configuration. Based on this, it is beneficial to avoid occupying the processor performance of the terminal and save the power consumption.

The manners for determining whether the second inactive multicast broadcast service configuration is the same as the first inactive multicast broadcast service will be illustratively explained through several embodiments below.

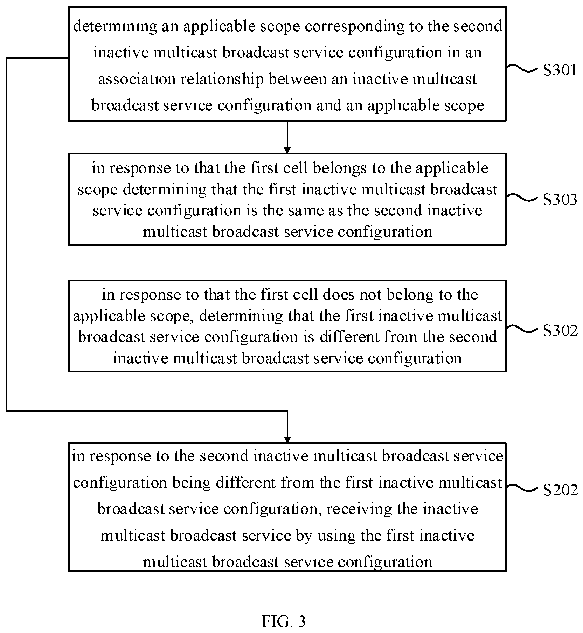

FIG. 3 is a schematic flowchart for determining whether a second inactive multicast broadcast service configuration is the same as a first inactive multicast broadcast service configuration according to an embodiment of the present disclosure. As shown in FIG. 3, the determining whether the second inactive multicast broadcast service configuration corresponding to the second cell where the terminal has resided is the same as the first inactive multicast broadcast service configuration includes:
in step S301, it is determined an applicable scope corresponding to the second inactive multicast broadcast service configuration in an association relationship between an inactive multicast broadcast service configuration and an applicable scope;
in step S302, in response to the first cell not belonging to the applicable scope, it is determined that the first inactive multicast broadcast service configuration is different from the second inactive multicast broadcast service configuration;
in step S303, in response to the first cell belonging to the applicable scope, it is determined that the first inactive multicast broadcast service configuration is the same as the second inactive multicast broadcast service configuration.

In one embodiment, the terminal may pre-store the association relationship between the inactive multicast broadcast service configuration and the applicable scope, where the association relationship may be determined based on a protocol agreement or configured by a network device, for example, before the cell resides in the first cell, the network device configures the association relationship to the terminal through an RRC Release message.

The applicable scope may be a cell, and that is, the inactive multicast broadcast service configuration is per cell; the applicable scope may be a cell list, and that is, the inactive multicast broadcast service configuration is per cell list; the applicable scope may be the service area, and that is, the inactive multicast broadcast service configuration is per service area.

When the inactive multicast broadcast service configuration is per cell, the first cell must not belong to the applicable scope corresponding to the second inactive multicast broadcast service configuration. Thus, it may be directly determined that the first inactive multicast broadcast service configuration is different from the second inactive multicast broadcast service configuration.

When the inactive multicast broadcast service configuration is per cell list or per service area, the terminal may further determine whether the first cell belongs to the applicable scope corresponding to the second inactive multicast broadcast service configuration.

For example, if the applicable scope of the second inactive multicast broadcast service configuration is cell list # 1, it may be determined whether the first cell (such as an identification of the first cell) belongs to cell list # 1; if the first cell belongs to cell list # 1, it may be determined that the first inactive multicast broadcast service configuration is the same as the second inactive multicast broadcast service configuration; if the first cell does not belong to cell list # 1, it may be determined that the first inactive multicast broadcast service configuration is different from the second inactive multicast broadcast service configuration.

For example, if the applicable scope of the second inactive multicast broadcast service configuration is service area # 1, it may be determined whether the first cell (such as the identification of the first cell) belongs to the service area # 1; if the first cell belongs to the service area # 1, it may be determined that the first inactive multicast broadcast service configuration is the same as the second inactive multicast broadcast service configuration; if the first cell does not belong to the service area # 1, it may be determined that the first inactive multicast broadcast service configuration is different from the second inactive multicast broadcast service configuration.

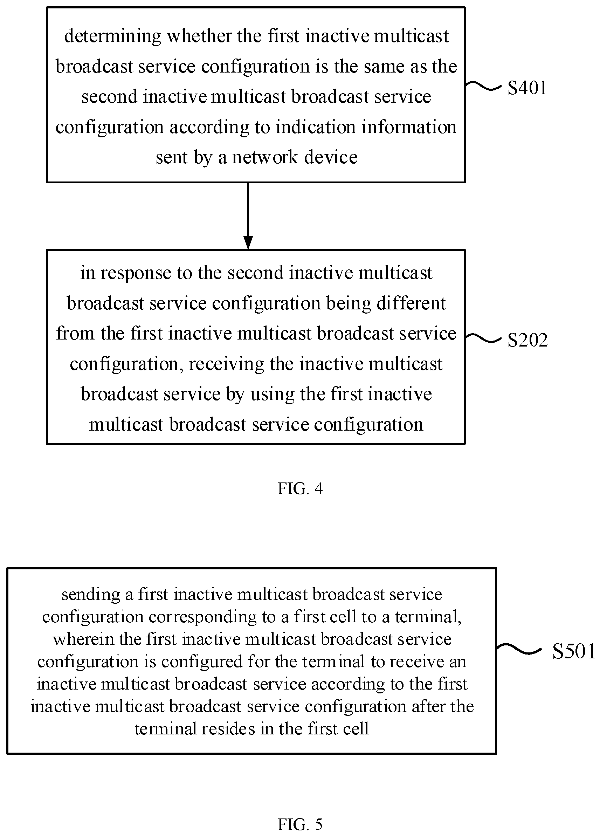

FIG. 4 is another schematic flowchart for determining whether a second inactive multicast broadcast service configuration is the same a first inactive multicast broadcast service configuration according to an embodiment of the present disclosure. As shown in FIG. 4, the determining whether the second inactive multicast broadcast service configuration corresponding to the second cell where the terminal has resided is the same as the first inactive multicast broadcast service configuration includes:
in step S401, it is determined whether the first inactive multicast broadcast service configuration is the same as the second inactive multicast broadcast service configuration according to indication information sent by a network device.

In one embodiment, after residing in the first cell, the terminal may receive the indication information sent by the network device, such as a paging message. The network device may indicate to the terminal through the indication information whether the first inactive multicast broadcast service configuration is the same as the second inactive multicast broadcast service configuration.

In a case that the terminal determines that the first inactive multicast broadcast service configuration is different from the second inactive multicast broadcast service configuration according to the indication information, the terminal may use the first inactive multicast broadcast service configuration for receiving the inactive multicast broadcast service. However, in a case that the terminal determines that the second inactive multicast broadcast service configuration is the same as the first inactive multicast broadcast service configuration, the terminal may continue to use the second inactive multicast broadcast service configuration to receive the inactive multicast broadcast service.

In one embodiment, a method for receiving an inactive multicast broadcast service is provided, where the terminal may receive the inactive multicast broadcast service according to the first inactive multicast broadcast service configuration corresponding to the first cell where the terminal resides.

The terminal receives the inactive multicast broadcast service according to the first inactive multicast broadcast service configuration corresponding to the first cell where the terminal resides, which may specifically include one of the following two scenarios:
scenario 1: receiving the inactive multicast broadcast service by using the first inactive multicast broadcast service configuration corresponding to the first cell;
scenario 2: stopping using the second inactive multicast broadcast service configuration corresponding to the second cell where the terminal has resided (in this case, the terminal may default to using the first inactive multicast broadcast service configuration for receiving the inactive multicast broadcast service).

The receiving the inactive multicast broadcast service by using the first inactive multicast broadcast service configuration corresponding to the first cell may further include two manners: manner 1: activating the first inactive multicast broadcast service configuration; manner 2: resuming the first inactive multicast broadcast service configuration.

Correspondingly, the stopping using the second inactive multicast broadcast service configuration corresponding to the second cell where the terminal has resided may also include two manners: manner 1: deactivating the second inactive multicast broadcast service configuration; manner 2: suspending the second inactive multicast broadcast service configuration.

In addition, some conditions may be added when using the first inactive multicast broadcast service configuration for receiving the inactive multicast broadcast service. For example, the first inactive multicast broadcast service configuration is used to receive the inactive multicast broadcast service only when the second inactive multicast broadcast service configuration is different from the first inactive multicast broadcast service configuration.

That is, the receiving the inactive multicast broadcast service by using the first inactive multicast broadcast service configuration includes: determining whether the second inactive multicast broadcast service configuration corresponding to the second cell where the terminal has resided is the same as the first inactive multicast broadcast service configuration; and in response to the second inactive multicast broadcast service configuration being different from the first inactive multicast broadcast service configuration, using the first inactive multicast broadcast service configuration to receive the inactive multicast broadcast service.

The determination of whether the second inactive multicast broadcast service configuration is the same as the first inactive multicast broadcast service configuration may be implemented based on the following two manners:
determination manner 1: it is determined that the applicable scope corresponding to the second inactive multicast broadcast service configuration in the association relationship between the inactive multicast broadcast service configuration and the applicable scope; in response to that the first cell does not belong to the applicable scope, it is determined that the first inactive multicast broadcast service configuration is different from the second inactive multicast broadcast service configuration; in response to that the first cell belongs to the applicable scope, it is determined that the first inactive multicast broadcast service configuration is the same as the second inactive multicast broadcast service configuration.
determination manner 2: it is determined that whether the first inactive multicast broadcast service configuration is the same as the second inactive multicast broadcast service configuration according to the indication information sent by the network device.

It should be noted that the first inactive multicast broadcast service configuration includes the multicast broadcast service configuration specific to the BWP corresponding to the first cell. Furthermore, the multicast broadcast service configuration specific to the BWP corresponding to the first cell includes the multicast broadcast service configuration specific to the initial BWP corresponding to the first cell. Furthermore, the multicast broadcast service configuration specific to the BWP corresponding to the first cell includes the CFR configuration of the multicast broadcast service. The CFR configuration of the multicast broadcast service includes at least one of the following: a frequency domain resource location and a bandwidth; a PDCCH configuration; a PDSCH configuration; an SPS configuration.

FIG. 5 is a schematic flowchart illustrating a method for sending an inactive multicast broadcast service configuration according to an embodiment of the present disclosure. The method for sending the inactive multicast broadcast service configuration shown in the present embodiment may be performed by a network device, and the network device may communicate with a terminal. The network device includes but is not limited to a base station in a communication system such as a 4G base station, a 5G base station, and a 6G base station. The terminal includes but is not limited to a communication device such as a mobile phone, a tablet, a wearable device, a sensor, an Internet of Things device, and other communication devices.

As shown in FIG. 5, the method for sending the inactive multicast broadcast service configuration may include the following step:
in step S501, a first inactive multicast broadcast service configuration corresponding to a first cell is sent to a terminal, where the first inactive multicast broadcast service configuration is configured for the terminal to receive an inactive multicast broadcast service according to the first inactive multicast broadcast service configuration after the terminal resides in the first cell.

In one embodiment, the network device may send the first inactive multicast broadcast service configuration corresponding to the first cell to the terminal.

The network device may send the first inactive multicast broadcast service configuration to the terminal before the terminal resides in the first cell. For example, when the terminal resides in the second cell before residing in the first cell, the network device sends the first inactive multicast broadcast service configuration to the terminal and indicates that the first inactive multicast broadcast service configuration is applicable to the first cell. For example, the network device may carry the first inactive multicast broadcast service configuration in a radio resource control release RRC Release message and send it to the terminal.

The network device may send the first inactive multicast broadcast service configuration to the terminal after the terminal resides in the first cell. For example, after the terminal resides in the first cell, the network device sends the first inactive multicast broadcast service configuration to the terminal. For example, the network device may carry the first inactive multicast broadcast service configuration in a paging message or a radio resource control release RRC Release message and send it to the terminal.

The terminal may receive the multicast broadcast service in an inactive state, and when the terminal resides in a cell in the inactive state, the terminal may receive the inactive multicast broadcast service according to the inactive multicast broadcast service configuration (such as the first inactive multicast broadcast service configuration) corresponding to the first cell where the terminal resides.

The inactive multicast broadcast service configuration includes but is not limited to a time-domain resource, a frequency-domain resource, a service type, and a service quality for receiving the inactive multicast broadcast service.

It should be noted that "residing" includes at least one of the following: cell selection or cell reselection. Taking the cell selection as an example, the present embodiment may be referred to as: receiving the inactive multicast broadcast service according to the first inactive multicast broadcast service configuration corresponding to the first cell selected in the cell selection; taking the cell reselection as an example, the present embodiment may be referred to as: receiving an inactive multicast broadcast service according to the first inactive multicast broadcast service configuration corresponding to the first cell selected in the cell reselection.

According to the disclosed embodiment, the network device sends the first inactive multicast broadcast service configuration to the terminal, such that the terminal may receive the inactive multicast broadcast service according to the first inactive multicast broadcast service configuration corresponding to the first cell after residing in the first cell in the inactive state. Based on this, it may be ensured that the terminal may smoothly determine the first inactive multicast broadcast service configuration after residing in the cell in the inactive state, and receive the inactive multicast broadcast service in the inactive state based on the first inactive multicast broadcast service configuration.

In one embodiment, the first inactive multicast broadcast service configuration includes a multicast broadcast service configuration specific to a bandwidth part BWP corresponding to the first cell.

The first inactive multicast broadcast service configuration refers to the inactive multicast broadcast service configuration of the first cell, which may specifically be the multicast broadcast service configuration specific to the BWP corresponding to the first cell, that is, the multicast broadcast service configuration is specifically applicable to one or a plurality of specific BWPs in the BWP corresponding to the first cell.

In one embodiment, the multicast broadcast service configuration specific to the BWP corresponding to the first cell includes a multicast broadcast service configuration specific to an initial BWP corresponding to the first cell. That is, the first inactive multicast broadcast service is specifically applicable to the multicast broadcast service configuration of the initial BWP in the BWP corresponding to the first cell.

In one embodiment, the multicast broadcast service configuration specific to the BWP corresponding to the first cell includes a common frequency resource (CFR) configuration of the multicast broadcast service. That is, the first inactive multicast broadcast service configuration may include the common frequency resource CFR configuration of the multicast broadcast service, which is specifically applicable to one or a plurality of specific BWPs in the BWP corresponding to the first cell.

In one embodiment, the multicast broadcast service configuration specific to the BWP corresponding to the first cell includes a CFR configuration of the multicast broadcast service. That is, the first inactive multicast broadcast service configuration may include the common frequency resource CFR configuration of the multicast broadcast service, and the CFR configuration of the multicast broadcast service is specifically applicable to the initial BWP corresponding to the first cell.

In one embodiment, the common frequency resource CFR configuration of the multicast broadcast service includes at least one of the following:
a frequency domain resource location and a bandwidth;
a physical downlink control channel (PDCCH) configuration;
a physical downlink shared channel (PDSCH) configuration; or
a semi-persistent scheduling (SPS) configuration.

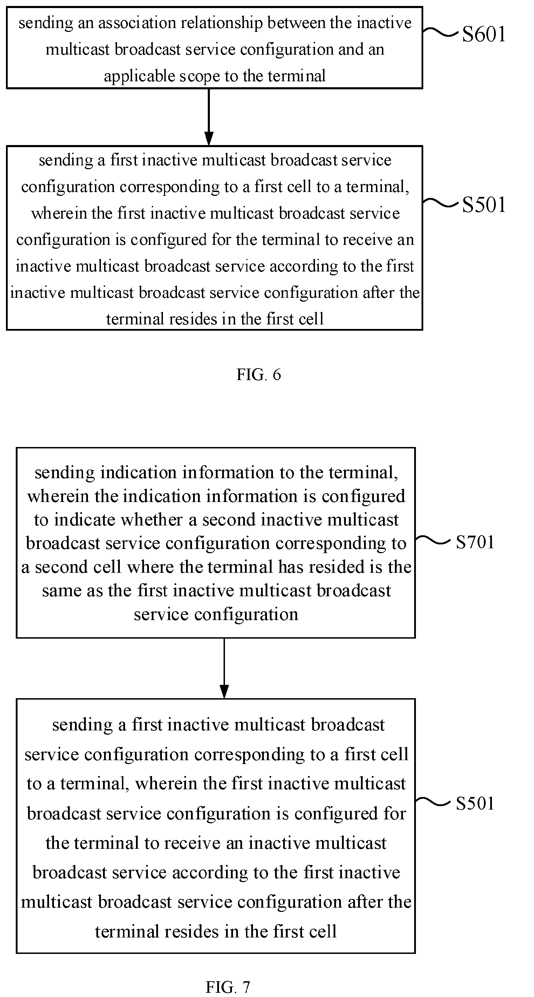

FIG. 6 is a schematic flowchart illustrating another method for sending an inactive multicast broadcast service configuration according to an embodiment of the present disclosure. As shown in FIG. 6, the method further includes:
in step S601, an association relationship between an inactive multicast broadcast service configuration and an applicable scope is sent to the terminal.

The association relationship is used for the terminal to determine a second applicable scope corresponding to the second inactive multicast broadcast service configuration of the second cell where the terminal has resided; in the case where the first cell does not belong the applicable scope, it is determined that the first inactive multicast broadcast service configuration is different from the second inactive multicast broadcast service configuration; in the case where the first cell belongs to the applicable scope, it is determined that the first inactive multicast broadcast service configuration is the same as the second inactive multicast broadcast service configuration.

In one embodiment, the network device may send the association relationship between the inactive multicast broadcast service configuration and the applicable scope to the terminal in advance (e.g., before the terminal resides in the first cell). For example, before the cell resides in the first cell, the network device configures the association relationship to the terminal through the RRC Release message.

The applicable scope may be a cell, and that is, the inactive multicast broadcast service configuration is per cell; the applicable scope may be a cell list, and that is, the inactive multicast broadcast service configuration is per cell list; the applicable scope may be the service area, and that is, the inactive multicast broadcast service configuration is per service area.

When the inactive multicast broadcast service configuration is per cell, the first cell must not belong to the applicable scope corresponding to the second inactive multicast broadcast service configuration. Thus, it may be directly determined that the first inactive multicast broadcast service configuration is different from the second inactive multicast broadcast service configuration.

When the inactive multicast broadcast service configuration is per cell list or per service area, the terminal may further determine whether the first cell belongs to the applicable scope corresponding to the second inactive multicast broadcast service configuration.

For example, the first and second cells belong to the same cell list, and the applicable scope corresponding to the second inactive multicast broadcast service configuration is cell list # 1, it may be determined whether the first cell (such as the identification of the first cell) belongs to the cell list # 1. If the first cell belongs to the cell list # 1, it may be determined that the first inactive multicast broadcast service configuration is the same as the second inactive multicast broadcast service configuration; if the first cell does not belong to the cell list # 1, it may be determined that the first inactive multicast broadcast service configuration is different from the second inactive multicast broadcast service configuration.

For example, the applicable scope corresponding to the second inactive multicast broadcast service configuration is service area # 1, it may be determined whether the first cell (such as the identification of the first cell) belongs to the service area # 1. If the first cell belongs to the service area # 1, it may be determined that the first inactive multicast broadcast service configuration is the same as the second inactive multicast broadcast service configuration; if the first cell does not belong to the service area # 1, it may be determined that the first inactive multicast broadcast service configuration is different from the second inactive multicast broadcast service configuration.

FIG. 7 is a schematic flowchart of another method for sending an inactive multicast broadcast service configuration according to an embodiment of the present disclosure. As shown in FIG. 7, the method further includes:
in step S701, indication information is sent to the terminal, where the indication information is configured to indicate whether the second inactive multicast broadcast service configuration corresponding to the second cell where the terminal has resided is the same as the first inactive multicast broadcast service configuration.

In one embodiment, the network may indicate to the terminal through the indication information whether the first inactive multicast broadcast service configuration is the same as the second inactive multicast broadcast service configuration. For example, after the terminal resides in the first cell, the network device may indicate information to the terminal, such as a paging message, indicating whether the first inactive multicast broadcast service configuration is the same as the second inactive multicast broadcast service configuration through the paging information.

In a case that the terminal determines that the first inactive multicast broadcast service configuration is different from the second inactive multicast broadcast service configuration according to the indication information, the terminal may use the first inactive multicast broadcast service configuration for receiving the inactive multicast broadcast service. However, in a case that the terminal determines that the second inactive multicast broadcast service configuration is the same as the first inactive multicast broadcast service configuration, the terminal may continue to use the second inactive multicast broadcast service configuration to receive the inactive multicast broadcast service.

In one embodiment, in the method for receiving the inactive multicast broadcast service, the network device may send the first inactive multicast broadcast service configuration corresponding to the first cell to a terminal, where the first inactive multicast broadcast service configuration is configured for the terminal to receive the inactive multicast broadcast service according to the first inactive multicast broadcast service configuration after residing in the first cell.

Correspondingly, the terminal may receive the inactive multicast broadcast service according to the first inactive multicast broadcast service configuration corresponding to the first cell where the terminal resides, which may specifically include the scenario 1 and scenario 2 mentioned above.

The network device may also send the association relationship between the inactive multicast broadcast service configuration and the applicable scope to the terminal; the association relationship is configured for the terminal to determine the second applicable scope corresponding to the second inactive multicast broadcast service configuration of the second cell where the terminal has resided; in the case where the first cell does not belong to the applicable scope, it is determined that the first inactive multicast broadcast service configuration is different from the second inactive multicast broadcast service configuration; in the case where the first cell belongs to the applicable scope, determine that the first inactive multicast broadcast service configuration is the same as the second inactive multicast broadcast service configuration (corresponding to the previous determination manner 1).

The network device may also send the indication information to the terminal, where the indication information is configured to indicate whether the second inactive multicast broadcast service configuration corresponding to the second cell where the terminal has resided is the same as the first inactive multicast broadcast service configuration (corresponding to the previous determination manner 2).

It should be noted that the first inactive multicast broadcast service configuration includes the multicast broadcast service configuration specific to the BWP corresponding to the first cell. Furthermore, the multicast broadcast service configuration specific to the BWP corresponding to the first cell includes the multicast broadcast service configuration specific to the initial BWP corresponding to the first cell. Furthermore, the multicast broadcast service configuration specific to the BWP corresponding to the first cell includes the CFR configuration of the multicast broadcast service. The CFR configuration of the multicast broadcast service includes at least one of the following: a frequency domain resource location and a bandwidth; a PDCCH configuration; a PDSCH configuration; an SPS configuration.

Corresponding to the embodiments of the method for receiving the inactive multicast broadcast service and the method for sending the inactive multicast broadcast service configuration described above, the present disclosure also provides embodiments of an apparatus for receiving an inactive multicast broadcast service and an apparatus for sending an inactive multicast broadcast service configuration.

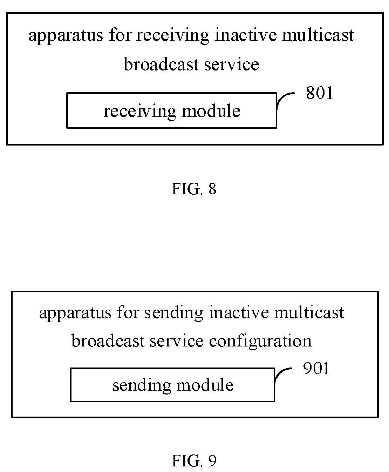

FIG. 8 is a schematic block diagram of an apparatus for receiving an inactive multicast broadcast service according to an embodiment of the present disclosure. The apparatus for receiving the inactive multicast broadcast service shown in the present embodiment may be a terminal or an apparatus composed of modules in the terminal, and the terminal includes but is not limited to a mobile phone, a tablet computer, a wearable device, a sensor, an Internet of Things device, and other communication devices. The terminal may communicate with a network device, and the network device includes but is not limited to a network device in a communication system such as 4G, 5G, and 6G, for example, a base station, a core network, and the like.

As shown in FIG. 8, the apparatus for receiving the inactive multicast broadcast service includes:
a receiving module 801, configured to receive an inactive multicast broadcast service according to a first inactive multicast broadcast service configuration corresponding to a first cell where a terminal resides.

In one embodiment, the receiving the inactive multicast broadcast service according to the first inactive multicast broadcast service configuration corresponding to the first cell where the terminal resides includes at least one of the following: receiving the inactive multicast broadcast service by using the first inactive multicast broadcast service configuration corresponding to the first cell; or stopping using a second inactive multicast broadcast service configuration corresponding to a second cell where the terminal has resided.

In one embodiment, the receiving the inactive multicast broadcast service by using the first inactive multicast broadcast service configuration corresponding to the first cell includes at least one of the following: activating the first inactive multicast broadcast service configuration; or resuming the first inactive multicast broadcast service configuration.

In one embodiment, the stopping using the second inactive multicast broadcast service configuration corresponding to the second cell where the terminal has resided includes at least one of the following: deactivating the second inactive multicast broadcast service configuration; suspending the second inactive multicast broadcast service configuration.

In one embodiment, the apparatus further includes a processing module, configured to determine whether the second inactive multicast broadcast service configuration corresponding to the second cell where the terminal has resided is the same as the first inactive multicast broadcast service configuration; the receiving module is configured to, in response to the second inactive multicast broadcast service configuration being different from the first inactive multicast broadcast service configuration, use the first inactive multicast broadcast service configuration to receive the inactive multicast broadcast service and/or stop using the second inactive multicast broadcast service configuration corresponding to the second cell where the terminal has resided.

In one embodiment, the processing module is configured to determine an applicable scope corresponding to the second inactive multicast broadcast service configuration in an association relationship between an inactive multicast broadcast service configuration and an applicable scope; in response to that the first cell does not belong to the applicable scope, determine that the first inactive multicast broadcast service configuration is different from the second inactive multicast broadcast service configuration; and in response to that the first cell belongs to the applicable scope, determine that the first inactive multicast broadcast service configuration is the same as the second inactive multicast broadcast service configuration.

In one embodiment, the processing module is configured to determine whether the first inactive multicast broadcast service configuration is the same as the second inactive multicast broadcast service configuration according to indication information sent by the network device.

In one embodiment, the first inactive multicast broadcast service configuration includes a multicast broadcast service configuration specific to a bandwidth part BWP corresponding to the first cell.

In one embodiment, the multicast broadcast service configuration specific to the BWP corresponding to the first cell includes a multicast broadcast service configuration specific to an initial BWP corresponding to the first cell.

In one embodiment, the multicast broadcast service configuration specific to the BWP corresponding to the first cell includes a common frequency resource CFR configuration of the multicast broadcast service.

In one embodiment, the common frequency resource CFR configuration of the multicast broadcast service includes at least one of the following: a frequency domain resource location and a bandwidth; a physical downlink control channel (PDCCH) configuration; a physical downlink shared channel (PDSCH) configuration; or a semi-persistent scheduling (SPS) configuration.

FIG. 9 is a schematic block diagram of an apparatus for sending an inactive multicast broadcast service configuration according to an embodiment of the present disclosure. The apparatus for sending the inactive multicast broadcast service configuration shown in the present embodiment may be a network device or an apparatus composed of modules in the network device. The network device may communicate with the terminal, and the network device includes but is not limited to a communication device such as a mobile phone, a tablet, a wearable device, a sensor, an Internet of Things device, and other communication devices. The network device includes but is not limited to a network device in a communication system such as 4G, 5G, 6G, and the like, such as a base station, a core network, and the like.

As shown in FIG. 9, the apparatus for sending the inactive multicast broadcast service configuration includes:
a sending module 901, configured to send a first inactive multicast broadcast service configuration corresponding to a first cell to a terminal, wherein the first inactive multicast broadcast service configuration is configured for the terminal to receive an inactive multicast broadcast service according to the first inactive multicast broadcast service configuration after the terminal resides in the first cell.

In one embodiment, the sending module is further configured to send an association relationship between an inactive multicast broadcast service configuration and an applicable scope to the terminal; the association relationship is configured for the terminal to determine a second applicable scope corresponding to the second inactive multicast broadcast service configuration of the second cell where the terminal has resided; in the case where the first cell does not belong to the applicable scope, it is determined that the first inactive multicast broadcast service configuration is different from the second inactive multicast broadcast service configuration; in a case where the first cell belongs to the applicable scope, it is determined that the first inactive multicast broadcast service configuration is the same as the second inactive multicast broadcast service configuration.

In one embodiment, the sending module is further configured to send indication information to the terminal, where the indication information is configured to indicate whether the second inactive multicast broadcast service configuration corresponding to the second cell where the terminal has resided is the same as the first inactive multicast broadcast service configuration.

In one embodiment, the first inactive multicast broadcast service configuration includes a multicast broadcast service configuration specific to a BWP corresponding to the first cell.

In one embodiment, the multicast broadcast service configuration specific to the BWP corresponding to the first cell includes the multicast broadcast service configuration specific to an initial BWP corresponding to the first cell.

In one embodiment, the multicast broadcast service configuration specific to the BWP corresponding to the first cell includes a common frequency resource CFR configuration of the multicast broadcast service.

In one embodiment, the common frequency resource CFR configuration of the multicast broadcast service includes at least one of the following: a frequency domain resource location and a bandwidth; a physical downlink control channel (PDCCH) configuration; a physical downlink shared channel (PDSCH) configuration; or a semi-persistent scheduling (SPS) configuration.

With respect to the apparatuses in the above-mentioned embodiments, the specific ways for performing operations for individual modules therein have been described in detail in the embodiments regarding the methods, which will not be elaborated herein.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

The embodiments of the present disclosure further provide a communication apparatus, including: a processor; and a memory for storing a computer program; where when the computer program is executed by the processor, the process is configured to implement the method for receiving the inactive multicast broadcast service described in any of the above-mentioned embodiments.

The embodiments of the present disclosure further provide a communication apparatus, including: a processor; and a memory for storing a computer program; where when the computer program is executed by the processor, the process is configured to implement the method for sending the inactive multicast broadcast service configuration described in any of the above-mentioned embodiments.

The embodiments of the present disclosure further provide a computer-readable storage medium having stored therein a computer program that, when executed by a processor, causes the processor to implement the method for receiving the inactive multicast broadcast service described in any of the above-mentioned embodiments.

The embodiments of the present disclosure further provide a computer-readable storage medium having stored therein a computer program that, when executed by a processor, causes the processor to implement the method for sending the inactive multicast broadcast service configuration described in any of the above-mentioned embodiments.

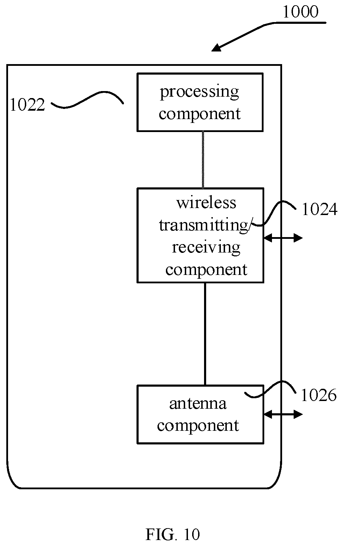

As shown in FIG. 10, FIG. 10 is a block diagram showing an apparatus 1000 for sending the inactive multicast broadcast service configuration according to an embodiment of the present disclosure. The apparatus 1000 may be provided as a base station. Referring to FIG. 10, the apparatus 1000 includes a processing component 1022, a wireless transmitting/receiving component 1024, an antenna component 1026, and a signal processing portion specific to a wireless interface, in which the processing component 1022 may further include one or more processors. One of the processors in the processing component 1022 may be configured to implement the method for sending the inactive multicast broadcast service configuration described in any of the above-mentioned embodiments.

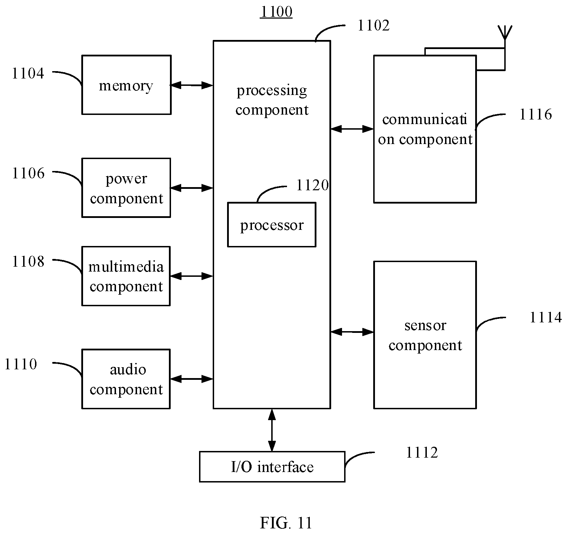

FIG. 11 is a block diagram showing an apparatus 1100 for receiving the inactive multicast broadcast service according to an embodiment of the present disclosure. For example, apparatus 1100 may be a mobile phone, computer, digital broadcast terminal, messaging device, game console, tablet device, medical device, fitness device, personal digital assistant, and the like.

Referring to FIG. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, phone calls, data communications, camera operations, and recording operations. The processing component 1102 can include one or more processors 1120 to execute instructions to perform all or some of the steps in the above-described method for receiving the inactive multicast broadcast service. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or an component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the apparatus 1100 and other devices. The apparatus 1100 can access a wireless network based on a communication standard, such as WiFi, 2G, or 3G, 4G LTE, 5G NR or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-mentioned method for receiving the inactive multicast broadcast service.

In an illustrative embodiment, there is also provided a non-transitory computer readable storage medium including instructions, such as included in the memory 1104, executable by the processor 1120 in the apparatus 1100, for completing the above-mentioned method for receiving the inactive multicast broadcast service. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the present disclosure described here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the embodiments of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a... " does not exclude the existence of another identical element in the process, method, article or device that includes the element.

The methods and apparatuses provided by the embodiments of the present disclosure have been described in detail above, and specific examples are used to illustrate the principle and implementation of the present disclosure. The description of the above embodiments is only used to help understand the methods and core ideas of the present disclosure. At the same time, for those skilled in the art, there will be some changes in the specific implementation and application scope according to the idea of the present disclosure. In summary, the content of the specification should not be construed as a limitation to the present disclosure.

## Claims

1. A method for receiving an inactive multicast broadcast service, performed by a terminal, comprising:
receiving the inactive multicast broadcast service according to a first inactive multicast broadcast service configuration corresponding to a first cell where the terminal resides.

2. The method according to claim 1, wherein the receiving the inactive multicast broadcast service according to the first inactive multicast broadcast service configuration corresponding to the first cell where the terminal resides comprises at least one of following:
receiving the inactive multicast broadcast service by using the first inactive multicast broadcast service configuration corresponding to the first cell; or
stopping using a second inactive multicast broadcast service configuration corresponding to a second cell where the terminal has resided.

3. The method according to claim 2, wherein the receiving the inactive multicast broadcast service by using the first inactive multicast broadcast service configuration corresponding to the first cell comprises at least one of following:
activating the first inactive multicast broadcast service configuration; or
resuming the first inactive multicast broadcast service configuration.

4. The method according to claim 2, wherein the stopping using the second inactive multicast broadcast service configuration corresponding to the second cell where the terminal has resided comprises at least one of following:
deactivating the second inactive multicast broadcast service configuration; or
suspending the second inactive multicast broadcast service configuration.

5. The method according to claim 2, wherein the receiving the inactive multicast broadcast service by using the first inactive multicast broadcast service configuration comprises:
determining whether the second inactive multicast broadcast service configuration corresponding to the second cell where the terminal has resided is the same as the first inactive multicast broadcast service configuration; and
receiving, in response to the second inactive multicast broadcast service configuration being different from the first inactive multicast broadcast service configuration, the inactive multicast broadcast service by using the first inactive multicast broadcast service configuration.

6. The method according to claim 5, wherein the determining whether the second inactive multicast broadcast service configuration corresponding to the second cell where the terminal has resided is the same as the first inactive multicast broadcast service configuration comprises:
determining an applicable scope corresponding to the second inactive multicast broadcast service configuration in an association relationship between an inactive multicast broadcast service configuration and an applicable scope;
determining, in response to that the first cell does not belong to the applicable scope, that the first inactive multicast broadcast service configuration is different from the second inactive multicast broadcast service configuration; and
determining, in response to that the first cell belongs to the applicable scope, that the first inactive multicast broadcast service configuration is the same as the second inactive multicast broadcast service configuration.

7. The method according to claim 5, wherein the determining whether the second inactive multicast broadcast service configuration corresponding to the second cell where the terminal has resided is the same as the first inactive multicast broadcast service configuration comprises:
determining, according to indication information sent by a network device, whether the first inactive multicast broadcast service configuration is the same as the second inactive multicast broadcast service configuration.

8. The method according to claim 2, wherein the first inactive multicast broadcast service configuration comprises a multicast broadcast service configuration specific to a bandwidth part BWP corresponding to the first cell.

9. The method according to claim 8, wherein the multicast broadcast service configuration specific to the BWP corresponding to the first cell comprises a multicast broadcast service configuration specific to an initial BWP corresponding to the first cell.

10. The method according to claim 8, wherein the multicast broadcast service configuration specific to the BWP corresponding to the first cell comprises a common frequency resource CFR configuration of the multicast broadcast service.

11. The method according to claim 10, wherein the common frequency resource CFR configuration of the multicast broadcast service comprises at least one of following:
a frequency domain resource location and a bandwidth;
a physical downlink control channel PDCCH configuration;
a physical downlink shared channel PDSCH configuration; or
a semi-persistent scheduling SPS configuration.

12. A method for sending an inactive multicast broadcast service configuration, performed by a network device, comprising:
sending a first inactive multicast broadcast service configuration corresponding to a first cell to a terminal, wherein the first inactive multicast broadcast service configuration is configured for the terminal to receive an inactive multicast broadcast service according to the first inactive multicast broadcast service configuration after the terminal resides in the first cell.

13. The method according to claim 12, further comprising:
sending an association relationship between the inactive multicast broadcast service configuration and an applicable scope to the terminal;
wherein the association relationship is configured for the terminal to determine a second applicable scope corresponding to a second inactive multicast broadcast service configuration of a second cell where the terminal has resided; in a case where the first cell does not belong to the applicable scope, it is determined that the first inactive multicast broadcast service configuration is different from the second inactive multicast broadcast service configuration; and in a case where the first cell belongs to the applicable scope, it is determined that the first inactive multicast broadcast service configuration is the same as the second inactive multicast broadcast service configuration.

14. The method according to claim 12, further comprising:
sending indication information to the terminal, wherein the indication information is configured to indicate whether a second inactive multicast broadcast service configuration corresponding to a second cell where the terminal has resided is the same as the first inactive multicast broadcast service configuration.

15. The method according to any one of claims 12 to 14, wherein the first inactive multicast broadcast service configuration comprises a multicast broadcast service configuration specific to a BWP corresponding to the first cell.

16. The method according to claim 15, wherein the multicast broadcast service configuration specific to the BWP corresponding to the first cell comprises a multicast broadcast service configuration specific to an initial BWP corresponding to the first cell.

17. The method according to claim 15, wherein the multicast broadcast service configuration specific to the BWP corresponding to the first cell comprises a common frequency resource CFR configuration of the multicast broadcast service.

18. The method according to claim 17, wherein the common frequency resource CFR configuration of the multicast broadcast service comprises at least one of following:
a frequency domain resource location and a bandwidth;
a physical downlink control channel PDCCH configuration;
a physical downlink shared channel PDSCH configuration; or
a semi-persistent scheduling SPS configuration.

19. An apparatus for receiving an inactive multicast broadcast service, comprising:
a receiving module, configured to receive the inactive multicast broadcast service according to a first inactive multicast broadcast service configuration corresponding to a first cell where a terminal resides.

20. An apparatus for sending an inactive multicast broadcast service configuration, comprising:
a sending module, configured to send a first inactive multicast broadcast service configuration corresponding to a first cell to a terminal, wherein the first inactive multicast broadcast service configuration is configured for the terminal to receive an inactive multicast broadcast service according to the first inactive multicast broadcast service configuration after the terminal resides in the first cell.

21. A communication apparatus comprising:
a processor; and
a memory for storing a computer program;
when the computer program is executed by the processor, the processor implements the method for receiving the inactive multicast broadcast service according to any one of claims 1 to 11.

22. A communication apparatus comprising:
a processor; and
a memory for storing a computer program;
when the computer program is executed by the processor, the processor implements the method for sending the inactive multicast broadcast service configuration according to any one of claims 12 to 18.

23. A computer-readable storage medium for storing a computer program, wherein, when the computer program is executed by a processor, the processor implements the method for receiving the inactive multicast broadcast service according to any one of claims 1 to 11.

24. A computer-readable storage medium for storing a computer program, wherein, when the computer program is executed by a processor, the processor implements the method for sending the inactive multicast broadcast service configuration according to any one of claims 12 to 18.
